**Europäisches Patentamt**

**European Patent Office**

**Office européen des brevets**

(19)

(11) Veröffentlichungsnummer : **0 433 603 B1**

(12)

# EUROPÄISCHE PATENTSCHRIFT

(45) Veröffentlichungstag der Patentschrift :
**01.12.93 Patentblatt 93/48**

(51) Int. Cl.⁵ : **F16H 61/02, // F16H59:08, B62D5:00**

(21) Anmeldenummer : **90120165.7**

(22) Anmeldetag : **20.10.90**

(54) **Verfahren zum Ermitteln eines Fahrerfaktors.**

(30) Priorität : **20.12.89 DE 3941999**

(43) Veröffentlichungstag der Anmeldung :
**26.06.91 Patentblatt 91/26**

(45) Bekanntmachung des Hinweises auf die
Patenterteilung :
**01.12.93 Patentblatt 93/48**

(84) Benannte Vertragsstaaten :
**DE FR GB IT SE**

(56) Entgegenhaltungen :
**EP-A- 0 144 608**
**EP-A- 0 304 089**
**DE-A- 3 341 652**
**FR-A- 2 602 724**
**GB-A- 2 154 523**

(73) Patentinhaber : **Bayerische Motoren Werke Aktiengesellschaft**
**Patentabteilung AJ-3**
**D-80788 München (DE)**

(72) Erfinder : **Welter, Andreas**
**Landsberger Strasse 115a**
**W-8000 München 2 (DE)**
Erfinder : **Werner, Jürgen**
**Rotwandweg 5**
**W-8046 Garching (DE)**
Erfinder : **Stephan, Anton**
**Brunnenstrasse 44**
**W-8011 Baldham (DE)**

## Beschreibung

Die Erfindung bezieht sich auf ein Verfahren zum Ermitteln eines den Fahrstil eines Fahrers charakterisierenden Fahrerfaktors in einem mit einer Brennkraftmaschine angetriebenen Kraftfahrzeug nach dem Oberbegriff des Anspruchs 1.

Die Ermittlung eines solchen Fahrerfaktors zeigt die DE-A-33 41 652. Der Fahrerfaktor wird hier zur Auswahl der jeweils optimalen, auf den Fahrtstil des Fahrers angepaßten Schaltkennlinie eines automatischen Getriebes herangezogen. Er wird dabei in der Weise ermittelt, daß eine Rechnereinheit das der Stellung des Fahrpedals proportionale Fahrpedalsignal zyklisch oder antizyklisch abfragt und den abgetasteten Wert in einer Fahrpedalspeichereinheit ablegt. Aus den einzelnen abgespeicherten Werten errechnet die Fahrpedalrechnereinheit über ein gewichtete Summe eine den Fahrstil des Fahrers repräsentierende Fahrpedalaktivität bzw. den Fahrerfaktor.

Auf die Art und Weise der Verarbeitung der Fahrpedalsignale zu dem Fahrerfaktor geht die Vorveröffentlichung nicht näher ein. Es ist daher Aufgabe der Erfindung, die Ermittlung eines, den Fahrtstil eines Fahrers wiedergebenden Fahrerfaktor, der auf das jeweilige Fahrzeug abgestimmt ist, darzustellen.

Die Aufgabe wird erfindungsgemäß mit den kennzeichnenden Verfahrensschritten nach Anspruch 1 gelöst. Ausgestaltungen der Erfindung ergeben sich aus den Unteransprüchen.

Der unabhängige Anspruch 3 bezieht sich auf ein Verfahren zur ständigen Anpassung des Fahrerfaktors an eine Änderung des Fahrstils des Fahrers.

Desweiteren beziehen sich die unabhängigen Ansprüche 4 und 5 auf die Verwendung des Mach den Ansprüchen 1 bis 3 ermittelten Fahrerfaktors.

Der Erfindung liegt folgender Algorithmus zugrunde:

$$F = A + B_1 \times \overline{\dot{\alpha}} + B_2 \times \overline{\alpha} + B_3 \times \overline{\Delta\alpha}$$

Dabei bezeichnet F den zu ermitelnde Fahrerfaktor. $\overline{\dot{\alpha}}$ gibt eine mittlere Gaspedalgeschwindigkeit, $\overline{\alpha}$ eine mittlere Gaspedalstellung und $\overline{\Delta\alpha}$ eine mittlere Abweichung der Gaspedalstellung von der Bedarfs-Gaspedalstellung an. Die Bedarfs-Gaspedalstellung $\alpha_B$ ist, abhängig von Fahrzeuggeschwindigkeit und eingelegtem Gang, in einer Tabelle abgelegt. Sie gibt den Gaspedalwinkel wieder, bei der die jeweilige Geschwindigkeit in der Ebene konstant bleibt. A, $B_1$, $B_2$ und $B_3$ sind fahrzeugspezifische Konstanten.

$\overline{\dot{\alpha}}$, $\overline{\alpha}$ und $\overline{\Delta\alpha}$ werden in folgender Form aus dem Fahrpedalsignal $\alpha$ gewonnen:

$$\overline{\dot{\alpha}} = 1/n \times \sum_{i=0}^{n} \left( \alpha_i - \alpha_{i-1} \right)$$

$$\overline{\alpha} = 1/n \times \sum_{i=0}^{n} \alpha_i$$

$$\overline{\Delta\alpha} = 1/n \times \sum_{i=0}^{n} \left( \alpha_i - \alpha_B \right)$$

Zur Bestimmung der fahrzeugspezifischen Koeffizienten A, $B_1$, $B_2$ und $B_3$ wir folgendermaßen vorgegangen: In vier verschiedenen Fahrzyklen werden die Größen $\overline{\dot{\alpha}}$, $\overline{\alpha}$ und $\overline{\Delta\alpha}$ ermittelt. Jedem dieser Fahrzyklen wird ein sinnvoller F-Faktor zugeordnet. Auf diese Weise ergibt sich ein System aus vier Gleichungen mit vier Unbekannten, dessen Lösungen die vier Koeffizienten sind.

In einer Ausgestaltung der Erfindung wird nicht nur ein Fahrerfaktor ermittelt, sondern deren zwei. Dabei sind die Zeitintervalle, über die die Kenngrößen $\overline{\dot{\alpha}}$, $\overline{\alpha}$ und $\overline{\Delta\alpha}$ gemittelt werden verschieden lang. Der längerfristig gemittelte Fahrerfaktor wird in der Regel zur Steuerung der Fahrzeugaggregate herangezogen. Die Abweichung zwischen dem länger- und dem kurzfristig ermittelten Fahrerfaktor wird laufend überwacht. Überschreitet die Abweichung eine vorgegebene Grenze, so wird, durch eine gewichtete Mittelung beider Werte, ein neuer Faktor erzeugt, der dann wiederum als Steuersignal für die zu beeinflussenden Fahrzeugaggregate dient. Auf diese Weise ist es möglich, plötzliche Änderungen des Fahrverhaltens zu berücksichtigen.

In einem bevorzugten Anwendungsfall wird der Fahrerfaktor zur Steuerung eines automatischen Getriebes herangezogen. In Abhängigkeit von seiner Größe wird in einem Schaltkennfeld eine entsprechende Schaltkennlinie ausgewählt. Dadurch ist es möglich, eine derart kennfeldgesteuerte Getrieberegelung so auszulegen, daß sie genau die Schaltungen ausführt, die der Fahrer bei einer manuellen Getriebeschaltung durchführen würde. Dabei läßt sich das Kennfeld in der Weise auslegen, daß für bestimmte Fahrerfaktoren (zwischen 0 und 1) im Versuch Schaltkennlinien festgelegt werden und zwischen diesen vorgegebenen Stützstellen interpoliert wird.

Um eine derartige Getriebesteuerung zu einer Getrieberegelung zu erweitern, wird die Reaktion des Fahrers auf einen Schaltvorgang beobachtet, zurückgeführt und in der Auswerteinheit gegebenenfalls zur Korrektur des Fahrerfaktors verwendet.

Die Verwendung eines Fahrerfaktors ist nicht allein auf die Steuerung des Getriebes beschränkt. So sind in einem Fahrzeug eine ganze Anzahl von Aggregaten vorhanden, die hilfskraftbetätigt werden. Als Beispiel sei hier genannt: Lenkhilfe, Bremskraftunterstützung, aktive Stoßdämpferbeeinflussung, Reifendruckregelung, Hinterradlenkung, Antiblockierbremssystem, Antriebsschlupfregelung und Kupplungssteuerung. Zur aktiven Beeinflussung dieser Systeme kann der Fahrerfaktor ebenfalls herangezogen werden. Dabei wird von der Annahme ausgegangen, daß ein Fahrer, der in sparsamer Weise sein Fahrzeug bewegt, beispielsweise eher eine leichtgängigere Lenkung wünscht als derjenige, der das Fahrzeug sportlich betreibt.

In einer weiteren Ausgestaltung der Erfindung wird der einmal ermittelte Fahrerwert in einer Memoryschaltung abgelegt. Sobald der Fahrer einsteigt und durch Schlüsselbetätigung oder Knopfdruck seine Identität zu erkennen gibt, schaltet das System auf den für diesen Fahrer ermittelten Fahrerfaktor. Dies kann in gleicher Weise wie bei einer Sitzmemoryschaltung geschehen bzw. mit einer solchen Schaltung verbunden sein.

Die Ermittlung des Fahrerfaktors aus dem Gaspedalsignal ist nachfolgend anhand eines Blockschaltbilds näher beschrieben.

Das Blockschaltbild zeigt eine insgesamt mit 1 bezeichnete, elektronische Auswerteinheit die eine Anzahl von Bausteinen umfaßt. Zunächst ist ein Zähler 2 vorgesehen, dessen Ausgangsleitung zu mehreren Verarbeitungseinheiten 3, 4, 5 und zu einem Kennfeldspeicher 6 führt. Die Ausgangsleitung der Verarbeitungseinrichtung 3 ist mit einem Speicher 7, die Ausgangsleitung der Verarbeitungseinrichtung 4 mit einem Speicher 8 und die Ausgangsleitung der Verarbeitungseinrichtung 5 mit einem Speicher 9 verbunden. Die Ausgänge dieser Speicher 7, 8 und 9 wiederum führen auf einen Summierer 10, der auch Signal erhält von einem weiteren Speicher 11.

Desweiteren zeigt das Blockschaltbild ein Fahrpedal 12, dessen Stellung durch eine geeignete Einrichtung in ein proportionales Fahrpedalsignal umgewandelt wird. Das Fahrpedal steuert dabei eine nicht dargestellte Brennkraftmaschine eines Kraftfahrzeuges. Das Fahrpedalsignal liegt gleichzeitig an der Verarbeitungseinrichtung 3, der Verarbeitungseinrichtung 4 und der Verarbeitungseinrichtung 5 an.

In Intervallen, die durch den Zähler 2 vorgegeben werden, wird der jeweilige Wert $\alpha_i$ des Fahrpedalsignals während eines vorgegebenen Zeitabschnitts $T_A$ in die einzelnen Einrichtungen 3, 4 und 5 eingelesen. Zugleich liefert bei jedem Intervall der Kennfeldspeicher 6, abhängig vom Signal des Fahrgeschwindigkeitssensors 13 und vom eingelegten Gang 14, der Verarbeitungseinrichtung 5 einen Signalwert $\alpha_B$, der die jeweilige Bedarfs-Fahrpedalstellung wiedergibt.

In den Verarbeitungseinrichtungen 3, 4 und 5 werden die Fahrpedalsignale $\alpha_i$ in der eingangs aufgezeigten Weise in Meßsignale verarbeitet, die die mittlere Fahrpedalgeschwindigkeit $\bar{\dot{\alpha}}$, die mittlere Fahrpedalstellung $\bar{\alpha}$ und die mittlere Fahrpedalabweichung $\overline{\Delta\alpha}$ wiedergeben. Das Meßsignal $\bar{\dot{\alpha}}$ wird mit der Konstante $B_1$ des Speichers 7, das Meßsignal $\bar{\alpha}$ mit der Konstante $B_2$ des Speichers 8 und der Wert von $\overline{\Delta\alpha}$ mit der Konstante $B_3$ des Speichers 9 multipliziert. Die so ermittelten Produkte werden nunmehr dem Summierer 10 zugeführt, und dort mit der Konstanten A addiert. Das sich aus dieser Summe ergebende Steuersignal liegt als Fahrerfaktor F am Ausgang der Auswerteeinrichtung 1 zur weiteren Verwendung an.

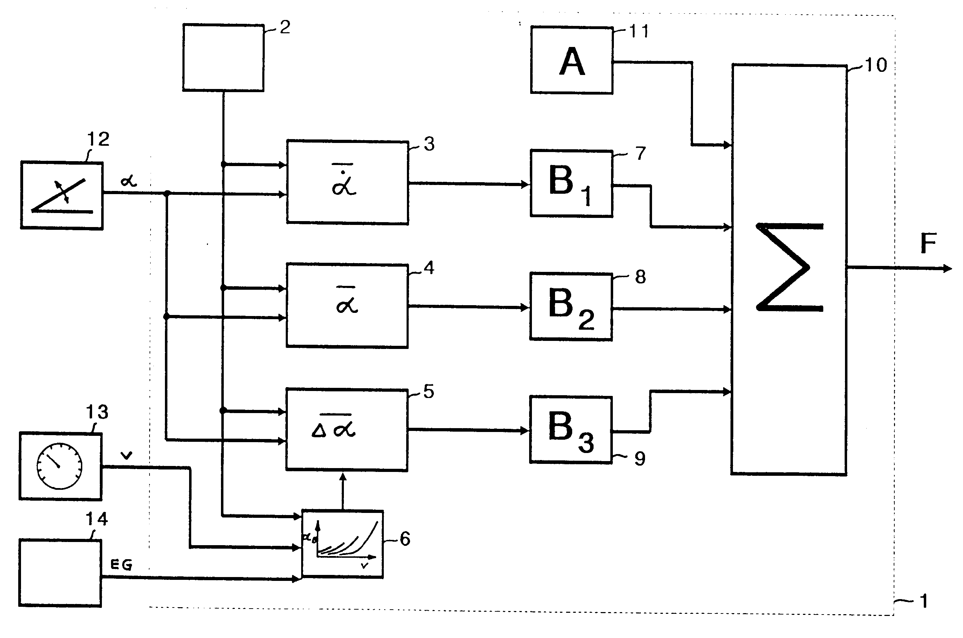

## Patentansprüche

1. Verfahren zum Ermitteln eines den Fahrstil eines Fahrers charakterisierenden Fahrerfaktors (F) in einem mit einer Brennkraftmaschine angetriebenen Kraftfahrzeug, wobei die Brennkraftmaschine mit einem Leistungssteuerorgan, vorzugsweise Fahrpedal beeinflußbar ist und ein der Stellung des Fahrpedals proportionales Fahrpedalsignal ($\alpha$) während eines Zeitabschnitts ($T_A$) zyklisch abgetastet und einer elektronischen Auswerteeinheit (1) zugeführt wird, dadurch gekennzeichnet, daß in Speichereinheiten (11, 7, 8, 9) der Auswerteeinheit (1) fahrzeugspezifische Konstanten (A, $B_1$, $B_2$, $B_3$) abrufbar sind, daß während eines Zeitabschnitts ($T_A$) Fahrpedalsignale ($\alpha_i$) in einer Anzahl (n) von Abtastintervallen ermittelt werden, wobei in einer Einrichtung (4) der Auswerteeinheit (1) ein Signalwert ($\bar{\alpha}$) für eine mittlere Gaspedalstellung ermittelt wird, in dem die einzelnen Fahrpedalsignale ($\alpha_i$) aufsummiert und durch die Anzahl (n) der Abtastintervalle dividiert werden, wobei in einer weiteren Einrichtung (3) ein Signalwert ($\bar{\dot{\alpha}}$) für eine mittlere Gaspedalgeschwindigkeit erzeugt wird, in dem die Differenzen zwischen einem augenblicklichen Fahr-

EP 0 433 603 B1

pedalsignal ($\alpha_i$) und einem vorausgegangenen Fahrpedalsignal ($\alpha_{i-1}$) aufsummiert und durch die Anzahl (n) der Abtastintervalle dividiert wird und wobei eine dritte Einrichtung (5) in der Auswerteeinheit (1) zur Ermittlung eines Meßsignals ($\overline{\Delta\alpha}$) für eine mittlere Abweichung der Fahrpedalstellung vorgesehen ist, in der die Abweichungen der einzelnen Fahrpedalsignale ($\alpha_i$) von einer in einem Kennfeldspeicher (6) niedergelegten, die Bedarfs-Fahrpedalstellungen ($\alpha_B$) wiedergebenden Kennlinie aufsummiert und durch die Anzahl (n) der Abtastintervalle dividiert werden und daß das Meßsignal ($\overline{\dot{\alpha}}$) mit der Konstanten ($B_1$), das Meßsignal ($\overline{\alpha}$) mit der Konstanten ($B_2$) und das Meßsignal ($\overline{\Delta\alpha}$) mit der Konstanten ($B_3$) multipliziert und die Produkte zusammen mit der Konstanten (A) in einem in der Auswerteeinheit (1) vorhandenen Summierer (10) zu einem dem Fahrerfaktor (F) wiedergebenden Steuersignal aufsummiert werden.

2. Verfahren nach Anspruch 1, dadurch gekennzeichnet, daß die fahrzeugspezifischen Konstanten so normiert sind, daß der Fahrerfaktor (F) einen Wert zwischen 0 und 1 einnimmt.

3. Verfahren zum Ermitteln eines den Fahrstil eines Fahrers charakterisierenden Fahrerfaktors (F) in einem mit einer Brennkraftmaschine angetriebenen Kraftfahrzeug, wobei die Brennkraftmaschine mit einem Leistungssteuerorgan, vorzugsweise Fahrpedal, beeinflußbar ist und ein der Stellung des Fahrpedals proportionales Fahrpedalsignal ($\alpha$) während eines Zeitabschnitts ($T_A$) zyklisch abgetastet und einer elektronischen Auswerteeinrichtung zugeführt wird, insbesondere nach Anspruch 1 oder 2, dadurch gekennzeichnet, daß ein Fahrerfaktor innerhalb eines längeren Zeitabschnitts und einer zweiter Fahrerfaktor innerhalb eines kürzeren Zeitabschnitts ermittelt wird, daß der langfristig ermittelte Fahrerfaktor als Steuersignal für ein zu beeinflussende Fahrzeugaggregat, zum Beispiel ein automatisches Getriebe, dient und daß der kurzfristig ermittelte Fahrerfaktor laufend mit dem langfristig ermittelten Fahrerfaktor verglichen und beim Überschreiten einer vorgegebenen Abweichungsgrenze ein neuer, als Steuersignal dienender Fahrerfaktor aus einer gewichteten Mittelung der beiden Fahrerfaktoren erzeugt wird.

4. Verwendung eines einen Fahrerfaktor wiedergebenden Steuersignals für die Beeinflussung von hilfskraftbetätigten Aggregaten in einem Kraftfahrzeug, wobei die Ermittlung des Fahrerfaktors nach einem der Verfahren 1 bis 3 erfolgt.

5. Verwendung des Steuersignals nach Anspruch 4, in einer Memoryeinrichtung, in der die Daten für die Einstellwünsche des jeweiligen Fahrzeuglenkers gespeichert sind.

**Claims**

1. A method for the determination of a driving factor (F) characterising the driving style of a driver in a motor vehicle powered by an internal combustion engine, whereby the internal combustion engine may be influenced by a power control device, preferably the accelerator pedal, and an accelerator pedal signal ($\alpha$), proportional to the position of the accelerator pedal, is sampled cyclically during a time interval ($T_A$) and fed to an electronic evaluating unit (1), characterised in that vehicle-specific constants (A, $B_1$, $B_2$, $B_3$) in the storage units (11, 7, 8, 9) of the evaluation unit (1) may be called up, and that accelerator pedal signals ($\alpha_1$) are determined at a number (n) of sampling intervals during a period of time ($T_A$), wherein a signal value ($\overline{\alpha}$) for a mean accelerator pedal position is arrived at by summation in a device (4) of the evaluation unit (1) of the individual accelerator pedal signals ($\alpha_i$) and divided by the number (n) of sampling intervals, wherein a signal value ($\overline{\dot{\alpha}}$) for a mean accelerator pedal speed is created in a further device (3) by addition of the differences between an accelerator pedal signal ($\alpha_i$) at a given moment in time and a preceding accelerator pedal signal ($\alpha_{i-1}$) and division by the number (n) of sampling intervals and wherein a third device (5) is provided in the evaluation unit (1) to determine a measured signal ($\overline{\Delta\alpha}$) for a mean difference in the accelerator pedal position, in which the deviations in individual accelerator pedal signals ($\alpha_i$) from a characteristic, representing the required accelerator pedal positions ($\alpha_B$), which is deposited in a characteristics map memory (6) are added together and divided by the number (n) of sampling intervals and that the measured signal ($\overline{\dot{\alpha}}$) is multiplied by the constant ($B_1$), and similarly the measured signal ($\overline{\alpha}$) by the constant ($B_2$) and the measured signal ($\overline{\Delta\alpha}$) by the constant ($B_3$),and the products are added together with the constant (A) in a summing device (10) contained in the evaluation unit (1) to give a control signal representing the driving factor (F).

2. A method according to Claim 1, characterised in that the vehicle-specific constants are standardized such that the driving factor assumes a value between 0 and 1.

4

3. A method to determine a driving factor (F) characterising the driving style of a driver in a motor vehicle powered by an internal combustion engine, whereby the internal combustion engine may be influenced by a power control device, preferably the accelerator pedal, and an accelerator pedal signal ($\alpha$) which is proportional to the position of the accelerator pedal is scanned cyclically during a time interval ($T_A$) and fed to an electronic evaluation unit, especially according to Claim 1 or 2, characterised in that one driving factor is determined within a longer time interval and a second driving factor is determined during a shorter time interval, and in that the driving factor determined over the longer period serves as a control signal for a vehicle assembly to be modulated, such as an automatic gearbox, and that the driving factor determined over a short period is continuously compared with the driving factor determined over a longer period and in the event of a pre-determined deviation limit being exceeded then a new driving factor serving as a control signal is derived from the weighted averaging of both driving factors.

4. The use of a control signal representing a driving factor to influence assemblies actuated by auxiliary apparatus in a motor vehicle, wherein the driving factor is determined according to any one of the methods in Claims 1 to 3.

5. The use of the control signal according to Claim 4 in a memory device in which the data for the desired settings of the particular vehicle driver are stored.

**Revendications**

1. Procédé pour déterminer un facteur (F) caractérisant le style de conduite d'un conducteur dans un véhicule à moteur entraîné par un moteur à combustion interne, dans lequel le moteur à combustion interne peut être influencé par un organe de régulation de la puissance, de préférence la pédale d'accélérateur et dans lequel un signal de pédale d'accélérateur ($\alpha$) proportionnel à la position de la pédale d'accélérateur est mis en mémoire cycliquement pendant une fraction de temps ($T_A$) et est amené à une unité de ce traitement (1) électronique, procédé caractérisé en ce que dans les unités de mémoire (11, 7, 8, 9,) de l'unité d'exploitation (1), on peut appeler les constantes (A, $B_1$, $B_2$, $B_3$) spécifiques du véhicule, en ce que pendant une fraction de temps ($T_A$) on détermine des signaux de pédale d'accélérateur ($\alpha_l$) au cours d'un nombre (n) d'intervalles d'exploration, alors que dans un dispositif (4) de l'unité d'exploitation (1),
on détermine une valeur de signal ($\alpha$) pour une position moyenne de la pédale d'accélérateur, tandis que l'on fait la somme des différents signaux de pédale d'accélérateur ($\overline{\alpha_l}$) et qu'on divise la somme par le nombre (n) des intervalles d'exploration, une valeur de signal ($\overline{\dot{\alpha}}$) pour une vitesse moyenne de la pédale d'accélérateur étant produite dans un autre dispositif (3), tandis que l'on fait la somme des différences entre un signal instantané de pédale d'accélérateur ($\overline{\alpha_l}$) et un signal de pédale d'accélérateur précédent ($\overline{\alpha_{l-1}}$) et on divise la somme par le nombre (n) des intervalles d'exploration, et alors qu'il est prévu un troisième dispositif (5) dans l'unité d'exploitation (1) pour déterminer un signal de mesure ($\overline{\Delta\alpha}$) pour un écart moyen de la position de la pédale d'accélérateur et dans lequel on fait la somme des écarts des différents signaux de pédale d'accélérateur ($\overline{\alpha_l}$) par rapport à une courbe caractéristique déposée dans une mémoire (6) de champ caractéristique, reproduisant les positions ($\alpha_B$) de pédale d'accélérateur nécessaires et on divise cette somme par le nombre (n) des intervalles d'exploration et en ce que le signal de mesure ($\overline{\dot{\alpha}}$) est multiplié par la constante ($B_1$), le signal de mesure ($\overline{\alpha}$) par la constante ($B_2$) et le signal de mesure ($\overline{\Delta\alpha}$) par la constante ($B_3$) et les produits sont additionnés en même temps que la constante (A) dans un organe de sommation (10) existant dans l'unité d'exploitation (1) pour obtenir un signal de commande reproduisant le facteur du conducteur (F).

2. Procédé selon la revendication 1, caractérisé en ce que les constantes spécifiques du véhicule sont normalisées de telle façon que le facteur du conducteur (F) prenne une valeur entre 0 et 1.

3. Procédé pour déterminer un facteur du conducteur (F), caractérisant le style de conduite d'un conducteur dans un véhicule à moteur entraîne par un moteur à combustion interne, dans lequel le moteur à combustion interne peut être influencé par un organe de commande de la puissance de préférence la pédale d'accélérateur et dans lequel un signal de pédale d'accélérateur ($\alpha$) proportionnel à la position de la pédale d'accélérateur est exploré cycliquement pendant un intervalle de temps ($T_A$) et est envoyé à un dispositif électronique d'exploitation, en particulier selon la revendication 1 ou 2, procédé caractérisé en ce qu'on détermine un facteur du conducteur à l'intérieur d'un intervalle de temps plus long et un deuxième facteur du conducteur à l'intérieur d'un intervalle de temps plus court, en ce que le facteur du conducteur déterminé à plus long terme sert de signal de commande pour un sous-ensemble du véhicule à influencer par exemple une boîte de vitesse automatique et en ce que le facteur du conducteur déterminé à court terme est comparé de façon continue au facteur du conducteur déterminé à plus long terme et en ce qu'on produit en cas de dépassement d'une limite prédéfinie d'écart, un nouveau facteur du conducteur servant de signal de commande à partir d'une moyenne pondérée des deux facteurs du conducteur.

4. Utilisation d'un signal de commande reproduisant un facteur du conducteur pour influencer les sous-ensembles actionnés par des forces auxiliaires dans un véhicule à moteur, la détermination du facteur du conducteur ayant lieu selon l'un des procédés 1 à 3.

5. Utilisation du signal de commande selon la revendication 4, dans un dispositif à mémoire, dans lequel les données pour les souhaits de réglage du conducteur correspondant du véhicule, sont mises en mémoire.